# EUROPÄISCHE PATENTSCHRIFT

(11) **EP 1 049 223 B1**
(45) Veröffentlichungstag und Bekanntmachung des Hinweises auf die Patenterteilung: **28.10.2009**
(21) Anmeldenummer: 00106183.7
(22) Anmeldetag: 21.03.2000
(51) Int. Cl.: H02B 1/38

(54) **Schaltschrank für eine Tablettenpresse**
Switch cabinet for a tablet press
Armoire de commande pour presse à comprimés

(30) Priorität: 26.04.1999 DE 19918804
(43) Veröffentlichungstag der Anmeldung: 02.11.2000
(73) Patentinhaber: Fette GmbH, 21493 Schwarzenbek (DE)
(72) Erfinder: Hinzpeter, Jürgen, 21493 Schwarzenbeck (DE); Schmidt, Ingo, 21493 Schwarzenbek (DE); Greve, Joachim, 23911 Pogeez (DE); Reitberger, Jörg, 21077 Hamburg (DE); Gathmann, Ulrich, 22147 Hamburg (DE); Preuss, Peter, Klaus, 23879 Mölln (DE)
(74) Vertreter: Hauck Patent- und Rechtsanwälte

(56) Entgegenhaltungen:
- EP-A- 0 849 849
- DE-U- 9 106 114
- US-A- 4 381 421

## Beschreibung

Die Erfindung bezieht sich auf einen Schaltschrank für eine Tablettenpresse nach dem Patentanspruch 1.

Zum System einer Tablettenpressvorrichtung gehört neben der eigentlichen Tablettenpresse und sonstigen Peripheriegeräten ein Schaltschrank, in dem alle Komponenten und Bauteile für die elektrische Ansteuerung der Tablettenpresse und der Peripheriegeräte enthalten sind. Derartige Schaltschränke haben wie üblich einen Korpus aus Metallblech und eine Tür, über die das Innere des Korpus und damit die einzelnen Teile im Schaltschrank zugänglich sind. Aus Sicherheitsgründen ist die Schaltschranktür üblicherweise geschlossen und darf nur von autorisierten Personen geöffnet werden. Das bedeutet jedoch, daß Störungen, die im Schaltschrank auftreten oder in diesem angezeigt sind, nicht dem sofortigen Zugriff zur Verfügung stehen, wenn die autorisierte Person nicht in der Nähe ist.

Aus DE 91 06 114 U ist ein Schaltschrank für elektrische Schaltanlagen bekannt geworden, bei dem eine Öffnung durch ein Fenster mit durchsichtiger Scheibe abgedeckt ist. Der Schaltschrank besteht aus Wand-, Decken- und Bodenabschnitten aus Metallblech, und die durchsichtige Scheibe besteht aus drei übereinander angeordneten Paneelen, wobei zwischen zwei Paneelen ein Geflecht aus elektrisch leitendem Material angeordnet ist. Das Fenster ist mittels einer Blechumrandung am Korpus befestigt, und die Schraubbefestigung hierfür bildet gleichzeitig eine Kontaktvorrichtung, die das Geflecht elektrisch mit einem Abschnitt des Korpus verbindet.

Daher liegt der Erfindung die Aufgabe zugrunde, einen Schaltschrank für eine Tablettenpresse mit einer Tür zu schaffen, die Einblick in das Innere des Schaltschranks auch bei geschlossener Tür erlaubt, die ferner gegen elektromagnetische Wellen abgeschirmt ist und sich zugleich gut reinigen läßt.

Diese Aufgabe wird durch die Merkmale des Patentanspruchs 1 gelöst.

Bei dem erfindungsgemäßen Schaltschrank besteht die Türplatte wie das Fenster im beschriebenen Stand der Technik komplett aus durchsichtigem Material. Die Türplatte setzt sich aus mindestens drei Schichten zusammen, nämlich aus zwei äußeren Paneelen aus ausreichend stabilem durchsichtigem Material, beispielsweise Acrylglas, und einem zwischen den Paneelen angeordneten Geflecht aus einem elektrisch leitenden Material. Das Geflecht ist so ausgeführt, daß es den Durchblick durch die Türplatte im wesentlichen nicht behindert. Auf diese Weise kann ein Bediener problemlos in das Innere eines Schaltschranks hinein schauen und feststellen, ob bestimmte Anzeigeleuchten oder dergleichen ansprechen bzw. eine Alarm- oder Fehlersituation anzeigen.

Die Türplatte ist, wie schon erwähnt, nur aus den beschriebenen Teilen aufgebaut. Eine stabilisierende Umrandung oder dergleichen ist nicht erforderlich. Dies hat den wesentlichen Vorteil, daß der Schaltschrank von außen durchgehend glatte Flächen aufweisen kann, was aus hygienischen Gründen von Wichtigkeit ist.

Für die elektrische Verbindung des Geflechts mit dem Korpus sieht die Erfindung vor, daß das innere Paneel am Rand einen Streifen des äußeren Paneels gegebenenfalls einschließlich des Geflechts freigibt und mit dem zugehörigen Gehäuseabschnitt ein Dichtstreifen aus elektrisch leitenden Material verbunden ist, der mit dem freigelegten Streifen mechanisch mit dem Geflecht elektrisch in Kontakt tritt, wenn die Tür in ihrer Schließstellung ist. Der freigelegte Streifen ist entweder vom Geflecht überdeckt und mit einer elektrisch leitenden Schicht versehen, die ihrerseits mit dem Geflecht elektrisch verbunden ist.

Es ist vorstellbar, den Dichtstreifen um die gesamte Türöffnung von innen herum anzuordnen und jeweils mit einem freigelegten Abschnitt des Geflechts in Eingriff zu bringen. Dadurch wird zwar eine Kontaktierung nur im geschlossenen Zustand der Tür hergestellt, ein Schutz gegen elektromagnetische Strahlung findet jedoch auch bei geöffneten Türen herkömmlicher Schaltschränke nicht statt.

Eine bevorzugte Lösung nach der Erfindung besteht darin, daß durch einen Fräsvorgang das innenliegende Paneel seitlich abgefräst wird einschließlich des Drahtgeflechts, so daß das benachbarte Paneel freigelegt ist. Der freigelegte Streifen einschließlich der Kante des abgefrästen Paneels wird mit einer Schicht aus leitendem Material beschichtet, beispielsweise einem Leitlack, insbesondere einem Silberleitlack. Der Dichtstreifen aus leitendem Material tritt dichtend mit der Leitschicht in Eingriff und stellt gleichzeitig mit dieser einen elektrischen Kontakt her. Die Leitschicht ist mit dem Geflecht leitend verbunden. Vorzugsweise ist der Dichtstreifen als kastenförmiges Profil ausgebildet, so daß ein breitflächiger Kontakt mit der Leitschicht hergestellt ist. Vorzugsweise befindet sich der Dichtstreifen im Scharnierbereich der Türplatte, er kann jedoch auch an allen vier Seiten der Türöffnung angebracht werden, wie weit oben ausgeführt.

Zusätzlich kann ein durch die Türplatte sich erstreckender Stift aus elektrisch leitendem Material vorgesehen sein, der mit dem Scharnier für die Tür und seinerseits mit dem Geflecht verbunden ist. Der Stift kann ein üblicher Befestigungsstift sein, der das Scharnier mit der Türplatte verbindet.

Ausführungsbeispiele werden anhand von Zeichnungen nachfolgend näher erläutert.
- Fig. 1: zeigt die Vorderansicht eines Schaltschrank nach der Erfindung.
- Fig. 2: zeigt einen Schnitt durch den Türbereich des Schaltschranks nach Fig. 1 entlang der Linie 2-2.
- Fig. 3: zeigt eine gegenüber Fig. 2 abgewandelte Art der Kontaktierung.

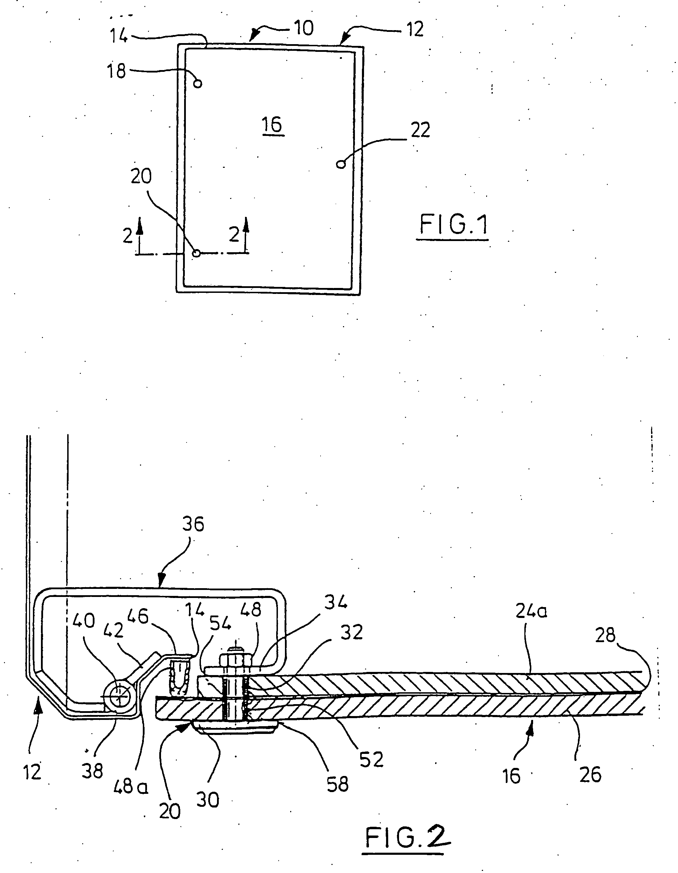

In Fig. 1 ist ein Schaltschrank 10 angedeutet, der einen Korpus 12 aufweist aus metallischem Blechmaterial. Der quaderförmige Schrank 10 weist eine vordere Öffnung 14 auf, welche durch eine Türplatte 16 verschließbar ist.

Die Türplatte ist an der linken Seite durch zwei Scharniere am Korpus 12 angelenkt, wobei Befestigungsstifte 18, 20 zur Befestigung der Türplatte 16 an den Scharnieren angedeutet sind. Bei 22 ist ein sog. Vorreiberstift angeordnet, der verdreht werden kann und der am inneren Ende einen Queransatz aufweist, der hinter eine Kante des Korpus 12 greift, um die Türplatte 16 zu verriegeln.

In Fig. 2 ist zu erkennen, daß die Türplatte 16 aus zwei übereinanderliegenden Paneelen 24a, 26 besteht, die aus durchsichtigem Material geformt sind, beispielsweise Acrylglas. Zwischen den Paneelen 24a, 26 befindet sich ein Geflecht 28 aus leitendem Material, das jedoch die Durchsicht durch die Tür 16 nicht behindert.

In Fig. 2 ist zu erkennen, daß der Stift 20 einen flanschartigen Kopf 30 und einen Gewindeschaft 32 aufweist, der sich durch eine Bohrung der Paneele 24a, 26 hindurcherstreckt. Der Gewindeschaft 32 erstreckt sich auch durch einen Abschnitt 34 eines kastenartigen Scharnierprofils 36, das nahe der Öffnung 14 ein Lagerauge 38 aufweist, das auf einen Lagerstift 40 aufgesteckt ist, der mit Hilfe eines Plattenabschnitts 42 an der entsprechenden Wand des Korpus 12 angebracht ist. Das Scharnierprofil 36 ist an die Innenkontur des Korpus 12 angepaßt, was jedoch für den vorliegenden Fall nicht von besonderer Bedeutung ist. Eine Mutter 48 befestigt den Abschnitt 34, der parallel zur Innenseite des Paneels 24a verläuft, mit dem Paneel 24a, so daß die Türplatte 16 aufgehängt ist und aus der Schließstellung in die Öffnungsstellung und umgekehrt verschwenkt werden kann. In Fig. 2 ist lediglich ein Scharnier dargestellt, wobei der Schaltschrank 10 nach Fig. 1 zwei Scharniere aufweist. Das zweite ist gleich dem nach Fig. 2 aufgebaut.

An dem nach innen gezogenen Abschnitt 46, an dem auch der Plattenabschnitt 42 beispielsweise durch Schweißung befestigt ist, ist ein Dichtstreifen 48a angebracht. Der Dichtstreifen 48a aus elastischem Material kann über die gesamte Öffnung 14 des Schranks 10 verlaufen. Er verhindert das Eindringen von Feuchtigkeit und Staub in das Innere des Schrankes.

Der Gewindeschaft 32 wird von einer hülsenförmigen Dichtung 52 umgeben, die an beiden Enden gegen Flachdichtungen 54 bzw. 58 aus leitendem Material anliegt. Dadurch ist das Geflecht 28 elektrisch wirksam mit dem Scharnierprofil 36 verbunden, das seinerseits elektrisch mit dem Korpus 12 verbunden ist, der aus elektrisch leitenden Blechen aufgebaut ist.

Das innere Paneel 24a hat geringere Abmessungen, so daß ein Streifen des Paneels 26 und des Geflechts 28 frei liegt. Ein solcher Streifen kann sich rundherum um das Türblatt erstrecken. Der Dichtsteifen 48a besteht aus elektrisch leitendem Material. Er steht in elektrischem Kontakt mit dem Geflecht 28, wenn die Türplatte 12 in der Schließstellung ist, wie sie in Fig. 2 gezeigt ist. Auf diese Weise erfolgt eine Kontaktierung des Geflechts 28 mit dem Korpus 12 über eine große Länge, die sich um die gesamte Umfangsfläche der Türplatte 16a erstrecken kann.

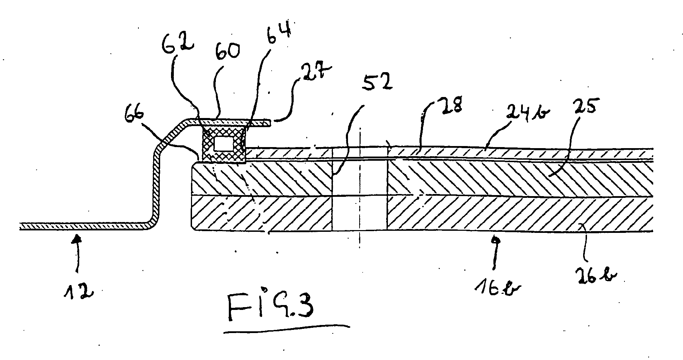

Bei der Ausführungsform nach Fig. 3 ist eine Türplatte 16b zu erkennen, die aus einem inneren Paneel 24b, einem mittleren Paneel 25 und einem äußeren Paneel 26b besteht. Ein Drahtgeflecht 28 ist zwischen den Paneelen 24b und 25 angeordnet. Durch alle Paneele hindurch erstreckt sich eine Bohrung 52, die mit einem Bolzen durchsetzt sein kann, der Teil eines Scharniers ist, wie es in Fig. 2 gezeigt und weiter oben beschrieben ist. Hierauf sollt nicht mehr weiter eingegangen werden. Das Scharnier ist in geeigneter Weise mit dem Korpus 12 verbunden, der in Fig. 4 nur angedeutet ist. Dieser ist im Bereich der Türöffnung, wie bei 27 angedeutet, mit einem nach innen gebogenen Rand 60 versehen, an dem ein im Querschnitt kastenförmiger Dichtstreifen 62 aus leitendem Material angebracht ist, beispielsweise durch Klebung.

Wie aus Fig. 3 ferner zu erkennen, ist durch Fräsen des Paneels 24b und des leitenden Gewebes 28 eine Ausnehmung 64 geformt, die mit einer leitfähigen Schicht, beispielsweise mit einem Leitlack 66 beschichtet ist. Dabei wird auch die linke Kante des Paneels 24b beschichtet, so daß die Schicht 66 mit dem Gewebe 28 elektrisch leitend verbunden ist. Die Ausnehmung 64 ist zusammen mit dem Dichtstreifen 62 so geformt, daß der Dichtstreifen bei geschlossener Türplatte 16b in die Ausnehmung 64 eingreift und sich gegen die Leitschicht 66 auf dem Paneel 25 anlegt und zugleich auch an die seitliche Kante des Paneels 24b mit dem zugehörigen leitfähigen Gewebe 28. Auf diese Weise ist eine wirksame elektrische Verbindung zwischen dem Gewebe 28 und dem leitfähigem Korpus 12 hergestellt. Der Aufwand hierfür ist relativ gering. Die Paneele 24b, 25 und 26b sind wirksam miteinander verbunden, ohne daß eine Umrandung oder ein Rahmen erforderlich ist. Lediglich das Wegfräsen eines streifenförmigen Abschnitts von Paneel 24b und des Geflechts 28 erfordert einen zusätzlichen Fertigungsgang.

## Patentansprüche

1. Schaltschrank für eine Tablettenpresse, mit
- einem Korpus (12) mit Wand-, Decken- und Bodenabschnitten aus Metallblech
- einer Platte an seiner Vorderseite, welche eine Korpusöffnung (14) verschließt und aus mindestens zwei Paneelen (26, 24a; 26b, 24b, 25) aus durchsichtigem Material besteht, zwischen denen ein Geflecht (28) aus elektrisch leitendem Material angeordnet ist,
**gekennzeichnet durch** eine über ein Scharnier (36) am Korpus (12) angeschlagene Türplatte (16, 16b), die nur aus den mindestens zwei Paneelen (26, 24a; 26b, 24b, 25) ohne Umrandung besteht, wobei das innere Paneel (24a, 24b) am Rand einen Streifen des äußeren Paneels (25, 26) mit Geflecht oder einer Leitschicht (66) freiläßt und mit dem zugekehrten Gehäuseabschnitt ein Dichtstreifen (48a; 62) aus elektrisch leitendem Material verbunden ist, der mit dem freigelegten Streifen in mechanischem und mit dem Geflecht unmittelbar oder über die Leitschicht (66) in elektrischen Kontakt tritt, wenn die Tür (16, 16b) in ihrer Schließstellung ist.

2. Schaltschrank nach Anspruch 1, **dadurch gekennzeichnet, daß** der Dichtstreifen (62) Kastenprofil aufweist.

3. Schaltschrank nach Anspruch 1 oder 2, **dadurch gekennzeichnet, daß** das innere Paneel (24b) durch Wegfräsung von Material und gegebenenfalls des Geflechts (28) den Streifen freiläßt.

4. Schaltschrank nach Anspruch 3, **dadurch gekennzeichnet, daß** mindestens ein sich durch die Türplatte (16, 16b) erstreckender und mit einem Scharnier (36) verbundener Stift (20) mit dem Geflecht (28) elektrisch leitend verbunden ist.

5. Schaltschrank nach Anspruch 4, **dadurch gekennzeichnet, daß** der Stift (20) Befestigungsmittel ist.

6. Schaltschrank nach Anspruch 4 oder 5, **dadurch gekennzeichnet, daß** in einer erweiterten Bohrung des einen Paneels (26) eine elektrisch leitende Kontaktbuchse (52) den Stift (20) umgibt und an einem Stirnende gegen das Geflecht (28) anliegt und am anderen Ende gegen einen Kopf (30) des Stiftes (20), wobei die Länge der Kontaktbuchse (50) etwas größer ist als die Dicke des Paneels (16a).

7. Schaltschrank nach Anspruch 6, **dadurch gekennzeichnet, daß** zwischen dem Kopf (30) des Stiftes (20) und der Kontaktbuchse (50) eine elektrisch leitende Dichtung (58) angeordnet ist.

## Claims

1. A control cabinet for a tablet press, comprising:
- an enclosure (12) having wall, ceiling, and bottom portions of sheet metal
- a plate on its front side closing an opening (14) of the enclosure and consisting of two panels (26, 24a, 26b, 24b, 25) of a transparent material between which a netting (28) of a conductive material is disposed,
**characterized in**
a door board (16, 16b) attached to the enclosure (12) by means of a hinge (36), the door board only consisting of the two panels (26, 24a, 26b, 24b, 25) with no surrounding border, wherein the inner panel (24a, 24b) has exposed a strip of the outer panel (26, 25) with netting or a conductive layer (66) at its edge and a sealing strip (48a, 62) of a conductive material is connected to the facing portion of the enclosure, which gets in a mechanical contact with the exposed strip and directly or via the conductive layer (66) in an electric contact with the netting (28) when the door (16, 16b) is in a closing position.

2. The control cabinet according to claim 1, **characterized in that** the sealing strip (62) is of a box-like profile.

3. The control cabinet according to claim 1 or 2, **characterized in that** the inner panel (24b) has exposed the strip formed by milling off material and the netting (28), if necessary.

4. The control cabinet according to claim 3, **characterized in that** a pin (20) extending through the door board (16, 16b) and connected to a hinge (36) is connected to the netting (28) in an electrically conductive way.

5. The control cabinet according to claim 4, **characterized in that** the pin (20) is a fixing means.

6. The control cabinet according to claim 4 or 5, **characterized in that** an electrically conductive bushing (52) surrounds the pin (20) in a widened bore of one panel (26) and one front-end of which abuts upon the netting (28) and the other end of which abuts upon a head (30) of the pin (20) with the length of the contact bushing (50) being slightly larger than the thickness of the panel (16a).

7. The control cabinet according to claim 6, **characterized in that** an electrically conductive sealing (58) is disposed between the head (30) of the pin (20) and the contact bushing (50).

## Revendications

1. Armoire de commande pour presse à comprimés, avec
- un corps (12) ayant des tronçons de paroi, de plafond et de plancher en tôle métallique
- une plaque sur son côté avant qui ferme une ouverture du corps (14) et se compose d'au moins deux panneaux (26, 24a; 26b, 24b, 25) en matériau transparent entre lesquels est disposé un treillis (28) en matériau électriquement conducteur,
**caractérisée par** une plaque de porte (16, 16b), fixée via une charnière (36) sur le corps (12), qui ne se compose que des au moins deux panneaux (26, 24a; 26b, 24b, 25) sans bordure, le panneau intérieur (24a, 24b) laissant libre, sur le bord, un ruban du panneau extérieur (25, 26) avec le treillis ou avec une couche conductrice (66), et un ruban d'étanchéité (48a; 62) en matériau électriquement conducteur étant raccordé au tronçon de logement adjacent et entrant en contact mécanique avec le ruban libéré et en contact électrique avec le treillis, directement ou via la couche conductrice (66), quand la porte (16, 16b) est dans sa position de fermeture.

2. Armoire de commande selon la revendication 1, **caractérisée en ce que** le ruban d'étanchéité (62) présente un profil en caisson.

3. Armoire de commande selon la revendication 1 ou 2, **caractérisée en ce que** le panneau intérieur (24b) libère le ruban par élimination de matériau par fraisage et éventuellement du treillis (28).

4. Armoire de commande selon la revendication 3, **caractérisée en ce que** au moins une cheville (20) s'étendant à travers la plaque de porte (16, 16b) et raccordée à une charnière (36) est raccordée au treillis (28) de façon électriquement conductrice.

5. Armoire de commande selon la revendication 4, **caractérisée en ce que** la cheville (20) est un moyen de fixation.

6. Armoire de commande selon la revendication 4 ou 5, **caractérisée en ce que**, dans un alésage élargi de l'un des panneaux (26), une douille de contact (52) électriquement conductrice entoure la cheville (20) et appuie, à une extrémité frontale, contre le treillis (28) et, à l'autre extrémité, contre une tête (30) de la cheville (20), la longueur de la douille de contact (50) étant légèrement plus grande que l'épaisseur du panneau (16a).

7. Armoire de commande selon la revendication 6, **caractérisée en ce que**, entre la tête (30) de la cheville (20) et la douille de contact (50), il est disposé un joint d'étanchéité (58) électriquement conducteur.
